# EUROPÄISCHE PATENTSCHRIFT

(11) **EP 2 631 058 B1**
(45) Veröffentlichungstag und Bekanntmachung des Hinweises auf die Patenterteilung: **08.04.2015**
(21) Anmeldenummer: 13154100.5
(22) Anmeldetag: 05.02.2013
(51) Int. Cl.: B29C 45/27, H05B 3/42

(54) **Heißkanaldüse mit einem elektrischen Heizelement**
Hot runner nozzle with an electrical heating element
Buse à canal chaud dotée d'un élément chauffant électrique

(30) Priorität: 22.02.2012 DE 102012101400
(43) Veröffentlichungstag der Anmeldung: 28.08.2013
(73) Patentinhaber: Günther Heisskanaltechnik GmbH, 35066 Frankenberg (DE)
(72) Erfinder: Sommer, Siegrid, 35099 Burgwald (DE); Zimmermann, Frédéric, 90482 Nürnberg (DE); Günther, Herbert, 35108 Allendorf (DE); Drössler, Ralf, 35066 Frankenberg (DE)
(74) Vertreter: Patentanwälte Olbricht Buchhold Keulertz

(56) Entgegenhaltungen:
- EP-A1- 0 695 618
- EP-A1- 2 448 369
- US-A- 5 507 636

## Beschreibung

Die Erfindung betrifft eine Heißkanaldüse mit einem elektrischen Heizelement, das eine Anschlusseinrichtung zum Erzeugen einer elektrischen Verbindung zu einer Anschlussleitung umfasst gemäß dem Oberbegriff von Anspruch 1.

Heißkanaldüsen werden in Spritzgießwerkzeugen eingesetzt, um eine fließfähige Masse - beispielsweise eine Kunststoffschmelze - bei einer vorgebbaren Temperatur unter hohem Druck einem trennbaren Formeinsatz zuzuführen. Sie haben meist ein Materialrohr mit einem Strömungskanal, der in einem Düsenmundstück endet. Letzteres bildet endseitig eine Düsenaustrittsöffnung, die über eine Angussöffnung in den Formeinsatz (Formnest) mündet.

Damit sich die fließfähige Masse innerhalb des Strömungskanals nicht vorzeitig abkühlt, ist außen auf dem Materialrohr ein elektrisches Heizelement vorgesehen. Dieses hat ein hülsenförmiges Trägerelement und einen elektrischen Leiter, der bei Anlegen einer elektrischen Spannung bzw. beim Durchfluss von elektrischem Strom Wärme erzeugt.

Der elektrische Leiter kann - wie beispielsweise in DE 10 2006 049 669 A1 oder US 5,507,636 A offenbart - eine aus Widerstandsdraht gebildete Heizwendel sein.

Um die Heizwendel gemäß US 5,507,636 A mit elektrischer Energie zu versorgen, weisen die beiden Enden des Widerstandsdrahtes parallel zueinander sowie radial von der Heizwendel weg. Die Spitzen des Widerstandsdrahtes sind hier abisoliert. Auf die zwei freien Enden wird eine Isolierbuchse mit zwei parallelen Bohrungen aufgesetzt, sodass je ein Leiter pro Bohrung angeordnet ist. Die Isolierbuchse steht dann mit einer Seite der Heizwendel gegenüber. Auf dieser Seite hat die Isolierbuchse ein Koppelmittel. Weiterhin wird die Heizwendel mit einer Manschette bestehend aus zwei Halbschalen umfasst. Diese Halbschalen bilden in einer ihrer beiden Kontaktflächen ein zweites Koppelmittel aus, mit welchem das Koppelmittel der Isolierbuchse fixiert wird. Dabei wird die Isolierbuchse beabstandet von der Heizwendel gehaltert. Damit die Manschette nicht auseinanderfällt, wird diese wiederum von einem Klemmring umfasst. Zur Kontaktierung des Widerstandsdrahtes mit einer Anschlussleitung, werden abisolierte Enden jeweils eines elektrischen Leiters von der gegenüberliegenden Seite in die Bohrungen eingeführt. Fixiert werden die Leitungen anschließend durch in die Isolierbuchse eingeschraubte Madenschrauben.

EP 0 695 618 A1 beschreibt eine Heizwendel, welche auf nahezu gleiche Weise wie bei US 5,507,636 A kontaktiert wird. Lediglich die Geometrie der Manschette und des Klemmrings sind anders ausgelegt, wohingegen die Koppelmittel und Leitungsführung der Ausführung nach US 5,507,636 A entspricht.

DE 10 2006 049 667 A1 hingegen verwendet als elektrischen Leiter sogenannte Dickschicht-Heizelemente, die im Siebdruckverfahren als Heizleiterbahnen auf dem Trägerelement aufgebracht sind. Zwischen dem Trägerelement und dem elektrischen Leiter ist meist eine Isolierschicht vorgesehen, die ebenfalls im Siebdruckverfahren als Dickschicht aufgebracht wird. Um die Baugröße des Heizelements bzw. der Heißkanaldüse noch weiter zu reduzieren, kann man die Isolierschicht und die Heizleiterbahnen - wie in DE 199 41 038 A1 beschrieben - auch unmittelbar auf der Außenwandung des Materialrohrs aufbringen.

Nachfolgend wird beispielhaft von einer Dickschichtheizung auf einem zylindrischen Trägerelement ausgegangen. Die Erfindung ist darauf jedoch nicht beschränkt, sondern in gleicher Weise auch bei anderen Heizelementen anwendbar.

Um die Dickschichtheizung mit Energie zu versorgen, ist an den Enden der Heizleiterbahn jeweils ein Anschlusskontakt vorgesehen, z.B. in Form einer Anschlusslitze oder eines Anschlussstifts (siehe dazu WO 2005/053361 A1, DE 10 2008 004 526 A1 oder DE 10 2008 015 376 A1). Über den Anschlusskontakt wird die Heizleiterbahn mit der Anschlussleitung einer Stromquelle verbunden, wobei eine solche elektrische Verbindung grundsätzlich folgende Anforderungen erfüllen muss:
- sie muss lösbar ausgebildet sein, um die Heißkanaldüse im Spritzgießwerkzeug ein- und ausbauen zu können und/oder um ein Heizelement im Falle eines Defekts austauschen zu können;
- sie muss einen stets ausreichenden und zuverlässigen elektrischen Kontakt zwischen den Anschlusskontakten der Heizleiterbahnen und der mit der Stromquelle verbundenen Anschlussleitung herstellen;
- sie muss aufgrund der beim Spritzgießen vorherrschenden hohen Temperaturen temperaturbeständig sein und mechanischen Zugbelastungen standhalten, die beim Ein- und Ausbau der Heißkanaldüse und/oder beim Auswechseln des Heizelements sowie durch Vibrationen auftreten können.

US 4 486 650 B1 offenbart eine lösbare Steckverbindung zwischen den Anschlussenden einer Heizwendel und der Anschlussleitung einer Stromversorgung. Die Enden der Heizwendel sind mit radial nach außen gerichteten Kontaktstiften versehen, die etwa mittig in je einer Muffe angeordnet sind. Die Enden der Anschlussleitung sind mit hülsenförmigen Steckkontakten versehen, die jeweils in einem Steckergehäuse untergebracht sind. Letztere werden in die Muffen eingesteckt, wobei die elektrisch leitende Verbindung zwischen der Außenoberfläche der Kontaktstifte und der Innenoberfläche der Steckkontakte hergestellt wird. Um zu verhindern, dass sich das Steckergehäuse von der Muffe löst, ist eine Spannvorrichtung in Form einer Überwurfmutter vorgesehen, die auf ein Außengewinde der Muffe aufgeschraubt wird. Für jeden Anschluss ist mithin ein separater Steckkontakt notwendig.

Darüber hinaus ist aus EP 2 448 369 A1 eine Anschlusseinrichtung für eine Heizvorrichtung einer Heißkanaldüse bekannt, bei welcher Anschlusskontakte der Heizvorrichtung in einem Isolierkörper enden, der die Anschlusskontakte elektrisch voneinander trennt. Der Isolierkörper hat einen Sockelabschnitt, der die Kontakte der Schichtheizung abdeckt und mit dem er sich auf der Heizvorrichtung abstützt. Außerdem ist der Isolierkörper zumindest abschnittsweise in einer Aufnahmehülse angeordnet. Die Aufnahmehülse fixiert den Isolierkörper an der Heizvorrichtung. Hierfür ist eine Überwurfhülse auf die Aufnahmehülse aufgesetzt und mit einem Düsenkopf der Spritzgießdüse verschraubt. Die Überwurfhülse verspannt die Aufnahmehülse und den Sockelabschnitt des Isolierkörpers gegen die Heizvorrichtung.

WO 2004 043 672 A1 offenbart ein Heizelement zum Aufsetzen auf eine Rohrleitung oder eine Heißkanaldüse, wobei das Heizelement mit einem stromdurchflossenen Leiter versehen ist, der über Anschlussleitungen an eine Stromquelle anschließbar ist. Die Anschlussleitungen weisen jeweils ein endseitiges Kontaktstück auf, das mit einer Kontaktfläche des Heizelementes in Anlage bringbar ist. Ferner ist eine Spannvorrichtung vorgesehen, mittels der das Kontaktstück gegen das Heizelement gespannt wird, wobei das Kontaktstück lose auf der Kontaktfläche des Heizelements aufliegt und wobei die Spannkraft der Spannvorrichtung im Wesentlichen normal zur Kontaktfläche wirkt und dabei das Kontaktstück gegen die Kontaktfläche spannt. Durch Lösen der Spannvorrichtung, die insbesondere eine aus dem Heizelement herausschraubbare Hülse umfasst, kommt das Kontaktstück von der Kontaktfläche frei, wodurch das Heizelement abgenommen und ausgetauscht werden kann. Die von der Spannvorrichtung erzeugte Spannkraft, wird entweder von einer Feder oder von einer Spannschraube erzeugt.

Eine solche Lösung hat den Nachteil, dass der elektrische Kontakt zwischen den Kontaktflächen des Heizelements und den Kontaktstücken der Anschlussleitung sowohl von der Beschaffenheit und der Sauberkeit der zu kontaktierenden Flächen als auch von der Spannkraft der Spannvorrichtung abhängig ist. Sind die Kontaktflächen uneben oder verschmutzt oder lässt die Spannkraft der Feder nach, kann es zu Kontaktproblemen kommen. Dies führt meist zu Leistungsverlusten innerhalb des Heizelements. Ferner kommt es im Bereich der Anschlusskontakte zu einer übermäßigen Wärmeentwicklung, was zu Schäden an dem Heizelement führen kann. Ein anderer Nachteil ist der benötigte Bauraum, da für jeden Anschlusskontakt eine separate Hülse in das Gehäuse der Spritzgießdüse eingeschraubt ist. Hierdurch ist die Montage/Demontage der Anschlussleitung an das Heizelement auch recht unkomfortabel.

Aufgabe der Erfindung ist es, diese und weitere Nachteile des Standes der Technik zu überwinden und eine Heißkanaldüse mit verbesserter elektrischer Anschlusseinrichtung für ein elektrisches Heizelement zu schaffen, welche die oben genannten Anforderungen zumindest teilweise erfüllt. Die Anschlusseinrichtung soll ferner mit einfachen Mitteln kostengünstig aufgebaut und einfach zu handhaben sein. Angestrebt wird insbesondere eine ebenso einfache wie rasche Montage.

Hauptmerkmale der Erfindung sind im kennzeichnenden Teil von Anspruch 1 angegeben. Ausgestaltungen sind Gegenstand der Ansprüche 2 bis 15.

Bei einer Heißkanaldüse mit einem elektrischen Heizelement, das eine Anschlusseinrichtung zum Erzeugen einer elektrischen Verbindung zu einer Anschlussleitung umfasst, wobei Anschlusskontakte des Heizelements in einem Isolierkörper der Anschlusseinrichtung enden, der die Anschlusskontakte elektrisch voneinander trennt, und wobei die Anschlussleitung Kontaktelemente aufweist, die mit den Anschlusskontakten des Heizelements elektrisch kontaktierbar sind, sieht die Erfindung vor, dass der Isolierkörper zumindest abschnittsweise in einer Aufnahmehülse der Anschlusseinrichtung angeordnet ist, dass die Anschlussleitung derart in oder an der Aufnahmehülse festlegbar ist, dass die Kontaktelemente der Anschlussleitung die Anschlusskontakte des Heizelements elektrisch kontaktieren, und dass ein in Richtung des Heizelements weisendes erstes Ende der Aufnahmehülse den Isolierkörper umgreift sowie an diesem ersten Ende zwei gegenüberliegend nach außen weisende und am Heizelement befestigte Füße aufweist.

Die Aufnahmehülse bildet zusammen mit dem Isolierkörper eine Anschlussstelle, insbesondere eine Art Stecker oder Kupplung zur Aufnahme der Anschlussleitung und deren Kontaktelemente. Dabei ist die Anschlussleitung über die Aufnahmehülse lösbar an dem Heizelement festlegbar, so dass die Heißkanaldüse rasch und bequem im Spritzgießwerkzeug ein- und ausgebaut werden kann. Typischerweise ist die Anschlussleitung mit einer Stromquelle verbunden. Die am anderen Ende der Anschlussleitung liegenden Kontaktelemente sind stets sicher und lösbar mit den Anschlusskontakten des Heizelements elektrisch kontaktierbar. Hierfür kann die Anschlussleitung endseitig einen Stecker oder eine Kupplung umfassen, der/die lösbar an der Aufnahmehülse festlegbar ist. Hierdurch ist die Spritzgießdüse nach einem Trennen vom Anschlusskabel einfach handhabbar, da kein langes zu entwirrendes oder zu verlegendes Kabel an ihr befestigt ist. Dies wirkt sich äußerst günstig auf die Wartungs- und Montagekosten aus. Zusätzlich ist es zweckmäßig, wenn die Anschlussleitung kraft- und/oder formschlüssig in oder an der Aufnahmehülse festlegbar ist, insbesondere wenn die Anschlussleitung mit der Aufnahmehülse verrastbar ist. Hierzu sollten die Aufnahmehülse und die Anschlussleitung entsprechende Rastelemente aufweisen, die beim Einführen des Steckers in die Kupplung in Eingriff gelangen.

Darüber hinaus hält die erfindungsgemäße Anschlusseinrichtung problemlos auch höheren Temperaturen stand, da die lösbare Schnittstelle zwischen dem Heizelement und der Anschlussleitung beabstandet zum stark erwärmten Bereich des Heizelements angeordnet ist.

Außerdem bietet die Anschlusseinrichtung eine mechanische Zugentlastung für die Anschlusskontakte des Heizelements, was beim Ein- und Ausbau der Heißkanaldüse und/oder beim Auswechseln des Heizelements wichtig ist. Hierzu tragen insbesondere die erfindungsgemäßen Füße bei, wodurch die Anschlusseinrichtung großen Kräften standhält. Die Füße sind zudem platzsparend anordenbar.

Ferner können der Isolierkörper und die Aufnahmehülse ihren Anforderungen entsprechend aus unterschiedlichen Materialien hergestellt sein, sodass die jeweiligen Anforderungen optimal erfüllt werden.

In dem Isolierkörper können zwei Anschlusskontakte des Heizelements angeordnet werden, die endseitig jeweils mit einem Kontaktstift versehen sind. Diese führen die meist empfindlichen und mit den Enden der Heizleiterbahnen verlöteten Anschlusskontakte des Heizelements fort und bieten in Verbindung mit dem Isolierköper eine deutlich verbesserte mechanische Stabilität. Dabei stehen sie vorzugsweise senkrecht zur Oberfläche des Heizelements.

Zusätzlich kann in dem Isolierkörper ein weiterer Kontaktstift vorgesehen sein, der mit der Masse des Heizelements elektrisch verbunden ist. Bevorzugt ist ein solcher weiterer Kontaktstift länger ausgebildet als die anderen Kontaktstifte. Der Vorteil liegt darin, dass beim Aufstecken und Abziehen der Anschlussleitung zu jedem Zeitpunkt eine Masseverbindung besteht, wenn auch einer der anderen Kontaktstifte kontaktiert ist. Kurzschlüsse oder unkontrollierte Entladungen werden dadurch wirksam vermieden. Alternativ kann die Masseverbindung über die Aufnahmehülse erfolgen, wenn diese elektrisch leitend ausgebildet ist. Gemäß einer erfindungsgemäßen Ergänzung sind in dem Isolierkörper ein oder zwei weitere Anschlusskontakte mit Kontaktstiften vorgesehen, die mit einem Thermofühler des Heizelements elektrisch verbunden sind. Ein solcher Thermofühler kann als Mantelthermoelement oder als Dickschichtthermoelement ausgeführt sein.

Die Kontaktstifte und der weitere Kontaktstift sind kraft- und/oder formschlüssig in dem Isolierkörper festgelegt, was sich äußerst günstig auf die Stabilität der Anschlusseinrichtung auswirkt. Dabei können die Kontaktstifte entweder über einen Halsabschnitt des Isolierkörpers vorstehen oder sie sind zumindest teilweise in dem Isolierkörper versenkt.

In einer Weiterbildung der Erfindung ist vorgesehen, dass das Heizelement ein Trägerrohr aufweist. Somit hat das Heizelement eine im Wesentlichen feste Struktur und die Temperaturverteilung ist gut vorhersehbar. Mittels des Trägerrohrs ist das Heizelement zudem präzise in der Heißkanaldüse positionierbar. Ein solches Trägerrohr kann unter anderem auf ein Materialrohr der Heißkanaldüse aufgeschoben sein, oder aber das Materialrohr bildet das Trägerrohr. Aufgrund hoher Leitungsdrücke im Inneren des Materialrohres ist ein Trägerrohr mit rundem Querschnitt zu bevorzugen, zumal das Materialrohr bevorzugt rund ausgebildet ist.

In einer anderen Ausgestaltung der Erfindung weisen die zwei Füße der Aufnahmehülse in Längsrichtung des Trägerrohres in entgegengesetzte Richtungen. Dadurch kann die Heißkanaldüse relativ schlank ausgebildet sein, wodurch mehreren Heißkanaldüsen eng aneinander anordenbar sind, so zum Beispiel an einem Verteiler.

Eine Variante der Erfindung sieht vor, dass das Heizelement ein abdeckendes Schutzelement aufweist, durch welches die Anschlusskontakte hindurchgeführt sind, sowie die Füße der Aufnahmehülse am Schutzelement befestigt sind. Ein solches Schutzelement schützt das Heizelement vor mechanischen Fremdeinwirkungen. Es kann beispielsweise als Schutzrohr ausgebildet sein.

Ein weiterer Schutz vor mechanischen Schäden kann durch eine Pufferschicht aus temperaturbeständigem Material erzielt werden, die zwischen dem Isolierkörper und dem Heizelement angeordnet ist. Geeignet hierfür ist beispielsweise eine Pufferschicht aus Glimmer. Die Pufferschicht sollte eine geringere Härte aufweisen als der Isolierkörper und das Heizelement, die meist spröde Materialien wie Keramiken umfassen. Letztere können sich gegenseitig beschädigen. Zweckmäßig weist die Pufferschicht Ausnehmungen auf, die den Anschlusskontakten, bzw. den Kontaktstiften korrespondieren.

Eine besonders kompakte Gestaltung und gut dosierbare Heizleistung wird bei einer Ausgestaltung des Heizelements erreicht, bei der dieses eine elektrisch leitende Dickschicht aufweist. Bevorzugt hat die Dickschicht im Bereich der Füße der Aufnahmehülse Aussparungen. Damit können die Füße am Trägersubstrat der Dickschicht befestigt werden. Dies eignet sich besonders gut, um eine hochfeste Verbindung zwischen den Füßen und dem Heizelement zu erzielen. Zum Heizen mit einer Dickschicht eignet sich insbesondere eine in Dickschichttechnologie aufgebrachte Widerstandsbahn. Diese kann unmittelbar auf einem Trägerelement oder aber auf einer tragenden Dickschicht aufgebracht sein. Zum Schutz und zur elektrischen Isolierung ist eine in Dickschichttechnologie aufgebrachte oberseitige Abdeckschicht vorsehbar.

Eine Fortbildung der Erfindung sieht vor, dass die Aufnahmehülse aus Metall hergestellt ist. Metall ist relativ Temperatur-, Alterungs- und Verschleißfest, gut geeignet Zugspannungen aufzunehmen, verformbar und geeignet für eine Vielzahl an Befestigungsverfahren, wie Schweißen, Ultraschallschweißen, Kleben, Löten, Schrauben, etc. Dabei kann die Innenseite der Hülse eine Aufnahmestruktur für den Isolierkörper und/oder den Stecker/die Kupplung der Anschlussleitung ausbilden. Alternativ kann solch eine innenseitige Struktur auch dadurch hergestellt werden, dass die Aufnahmehülse eine konzentrisch innenliegende Innenhülse aufweist. Eine solche Innenhülse wäre dann in einer Außenhülse der Aufnahmehülse fixiert. Wenn die Innenhülse einen Kragen aufweist, kann sich dieser konzentrisch an der Außenhülse der Aufnahmehülse abstützen und die Fertigung, insbesondere das Zusammenfügen von Innen- und Außenhülse, ist besonders einfach. So kann der Kragen der Innenhülse mit der Außenhülse stoffschlüssig verbunden werden, vorzugsweise durch Schweißen.

Gemäß einer Fortbildung der Erfindung bildet die Aufnahmehülse ein Führungsmittel für einen Stecker oder eine Kupplung der Anschlussleitung aus. Dies vereinfacht das Anbringen der Anschlussleitung an der Aufnahmehülse. So können z.B. keine falschen Pole der elektrischen Leitungen miteinander kontaktiert werden. Auch ein Verbiegen der Anschlusskontakte oder Kontaktstifte ist nahezu ausgeschlossen. Je nachdem, ob die Anschlussleitung einen Stecker oder Kupplung aufweist, sollte die Aufnahmehülse als Kupplungsgehäuse oder bevorzugt als Steckergehäuse ausbildet sein. Letzteres ist zu bevorzugen, da Stecker schlanker gestaltet sind und somit weniger Bauraum in unmittelbarer Umgebung des Heizelements für die Anschlusseinrichtung notwendig ist.

Eine besonders vorteilhafte Weiterbildung der Erfindung sieht eine stoffschlüssige Befestigung der Füße am Heizelement vor. Mechanische oder separate Befestigungsmittel sind somit nicht notwendig, was sich günstig auf die Fertigungskosten auswirkt. Stoffschlüssige Verbindungen wie Schweißverbindungen sind zudem sehr fest, lösen sich nicht durch thermische Wechsel und sind automatisiert fertigbar. Darüber hinaus wird nicht in die Struktur des Heizelements eingegriffen, was insbesondere dann wichtig ist, wenn das Heizelement ein als Materialrohr ausgebildetes Trägerrohr umfasst. Bestens geeignet sind am Heizelement angeschweißte Füße. Hierfür eignen sich Laserschweiß-, Elektroschweiß- und Ultraschweißverfahren.

In einer Ausgestaltungsvariante der Aufnahmehülse sind die Füße einteilig mit der Aufnahmehülse ausgebildet. Entsprechend fest ist die Verbindung zwischen den Füßen und der Aufnahmehülse. Gleichzeitig ist die Fertigung besonders einfach. Die Aufnahmehülse kann nebst Füßen aus einem Rohr gefertigt werden. Ein solches kann zunächst abgelängt, dann mit Längseinschnitten zwischen den Füßen versehen werden und schließlich können die Füße nach außen gebogen werden.

In einer erfindungsgemäßen Variante sind die Füße jeweils mit einem Schenkelabschnitt an der Aufnahmehülse festgelegt und mit jeweils einem Auflageabschnitt an dem Heizelement befestigt. Der zwischen den Füßen und der Aufnahmehülse liegende Schenkelabschnitt kann dabei schräg zur Längsrichtung eines Trägerrohres verlaufen. Eine Verbindung der Füße zur Aufnahmehülse liegt bei solch V-förmig gespreizten Schenkelanschnitten beabstandet zum Heizelement. Die Aufnahmehülse ist durch solch eine Abspannung stabil mit dem Heizelement verbunden. Um eine hochfeste Verbindung zwischen den Füßen und dem Heizelement herstellen zu können, bietet es sich an, die Auflageflächen der Auflageabschnitte der Füße jeweils als Negativform einer korrespondierenden Auflagefläche des Heizelements auszubilden, z.B. konkav wenn das Heizelement rund ist. Dies vereinfacht auch den Befestigungsprozess.

Um auch den Isolierkörper stabil zu fixieren, sieht eine Weiterentwicklung der Erfindung vor, dass die Füße unter einer in Richtung des Heizelements wirkenden Vorspannkraft am Heizelement befestigt sind, wobei die Aufnahmehülse mit dem Isolierkörper derart gekoppelt ist, dass der Isolierkörper mit dieser Vorspannkraft in Richtung des Heizelements kraftbeaufschlagt ist. Diese Vorspannkraft kann durch die Füße selbst oder von einem Federelement erzeugt werden. Das Federelement kann zwischen dem Isolierkörper und der Aufnahmehülse angeordnet sein. Beim Fixieren der Füße am Heizelement ist das Federelement dann mit einer Kraft zu beaufschlagen, insbesondere z.B. durch Herabdrücken der Aufnahmehülse in Richtung des Heizelements. Das Federelement kann einstückig mit der Aufnahmehülse ausgebildet sein. Man kann aber auch ein separates Federelement, beispielsweise eine Tellerfeder oder eine Blattfeder einsetzen. Die Aufnahmehülse oder das Federelement stützen sich in Axialrichtung der Aufnahmehülse bevorzugt auf einem Sockel des Isolierkörpers ab, so dass dieser in montierter Position mit einer permanenten und definierten Kraft gegen das Heizelement gedrückt wird.

Zur Übertragung der Vorspannkraft von der Aufnahmehülse auf den Isolierkörper können diese über einen Hinterschnitt miteinander gekoppelt sein. Alternativ können diese auch mittels eines zusätzlichen Koppelmittels miteinander gekoppelt sein, oder aber sie werden unmittelbar durch einen Stoffschluss verbunden, wie z.B. durch Verkleben, Schweißen, Laserschweißen, Ultraschallschweißen oder Löten.

Bei einer äußerst vorteilhaften Gestaltung des Isolierkörpers weist dieser einen Halsabschnitt und einen Sockelabschnitt auf, wobei sich die Aufnahmehülse auf dem Sockelabschnitt des Isolierkörpers abstützt. Der Halsabschnitt kann so relativ schlank ausgebildet werden, wohingegen der Sockelabschnitt eine breite stabile Auflagefläche auf dem Heizelement aufweist. Er trägt auch maßgeblich zur Stabilität der Anschlusseinrichtung bei, die mechanischen und thermischen Belastungen problemlos standhält. Zudem können unterhalb des Sockelabschnitts liegende Anschlusskontakte abgedeckt und durch Beabstandung elektrisch voneinander getrennt werden. Zudem bildet der Sockel einen geeigneten Hinterschnitt aus, auf welchem sich die Aufnahmehülse großzügig abstützen kann. Sofern das Heizelement ein rundes Trägerrohr umfasst, ist eine Erstreckung des Sockels im Wesentlichen in Längsrichtung hinreichend. Die Unterseite des Sockelabschnitts kann eine Auflagefläche mit der Negativform der gegenüberliegenden Auflagefläche des Heizelements aufweisen.

Ferner sieht eine Ausführungsform der Erfindung vor, dass die Aufnahmehülse einen Abschnitt mit einer Innenwandung aufweist, deren Geometrie im Wesentlichen der korrespondierenden Außengeometrie des Halsabschnitts des Isolierkörpers entspricht. Somit sind Aufnahmehülse und Isolierkörper definiert zueinander positionierbar. Im einfachsten Fall ist die Innenwandung der Aufnahmehülse ein Zylindermantel. Entsprechend sollte der Halsabschnitt des Isolierkörpers zylinderförmig sein. Es bietet sich weiterhin an, zwischen dem Isolierköper und der Aufnahmehülse eine Verdrehsicherung auszubilden, bspw. mittels Nut und Feder. Die beiden Bauteile sind so während der Montage und während des Betriebes stets zuverlässig zueinander positioniert.

Ferner betrifft eine Ergänzung der Erfindung ein das Heizelement einfassendes Gehäuse, in welches eine seitliche Aussparung eingebracht ist, die in Längsrichtung der Heißkanaldüse zu einem Verteiler bzw. zu einem Flansch eines Materialrohres hin offen ausgebildet ist, wobei die Aufnahmehülse durch die seitliche Aussparung hindurchragt. Dies ermöglicht eine einfache Montage der Heißkanaldüse, indem das Gehäuse in Längsrichtung auf das Heizelement aufgeschoben werden kann. Bei der Demontage lässt sich das Gehäuse zerstörungsfrei rasch und bequem von dem Heizelement entfernen.

Ein weiteres optionales Merkmal kann dadurch ausgebildet sein, dass die Aufnahmehülse ein Befestigungsmittel für einen Thermofühler aufweist. Der Thermofühler wird so auf der gleichen Düsenseite herausgeführt und mittels der Aufnahmehülse gestützt. Dieses Befestigungsmittel ist vorzugsweise beabstandet zum Heizelement positioniert und dessen Aufnahmekanal vom Heizelement wegweisend ausgerichtet. Der Thermofühler verläuft somit parallel zur Anschlusseinrichtung vom Heizelement weg. In Richtung des Heizelements kann der Thermofühler zunächst wendelförmig um das Heizelement herumgeführt werden, bevor er parallel zum Trägerrohr in Richtung Düsenmundstück der Heißkanaldüse verläuft. Als gut fixierendes Befestigungsmittel eignet sich eine auf der Außenseite der Aufnahmehülse angeordnete Durchsteckhülse. Um den Thermofühler besonders schnell austauschen zu können, ist alternativ eine Ausbildung des Befestigungsmittels mit einem auf der Außenseite der Aufnahmehülse angeordneten Federclip zu bevorzugen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine 3D-Ansicht einer Heißkanaldüse mit einem Heizelement mit einer in einem Schnittausbruch gezeigten Anschlusseinrichtung;
- Fig. 2: eine Heißkanaldüse mit einem Heizelement mit einer Anschlusseinrichtung und einem Gehäuse in einer Vormontageposition;
- Fig. 3a: eine 3D-Ansicht einer als Kupplungsgehäuse ausgebildeten Aufnahmehülse;
- Fig. 3b: eine 3D-Ansicht einer weiteren als Kupplungsgehäuse ausgebildeten Aufnahmehülse;
- Fig. 4: eine 3D-Ansicht einer als Steckergehäuse ausgebildeten Aufnahmehülse;
- Fig. 5: einen Schnitt durch einen Isolierkörper;
- Fig. 6: eine Ansicht eines Isolierkörpers aus der Vogelperspektive; und
- Fig. 7: eine Ansicht eines Isolierkörpers aus Richtung des Heizelements

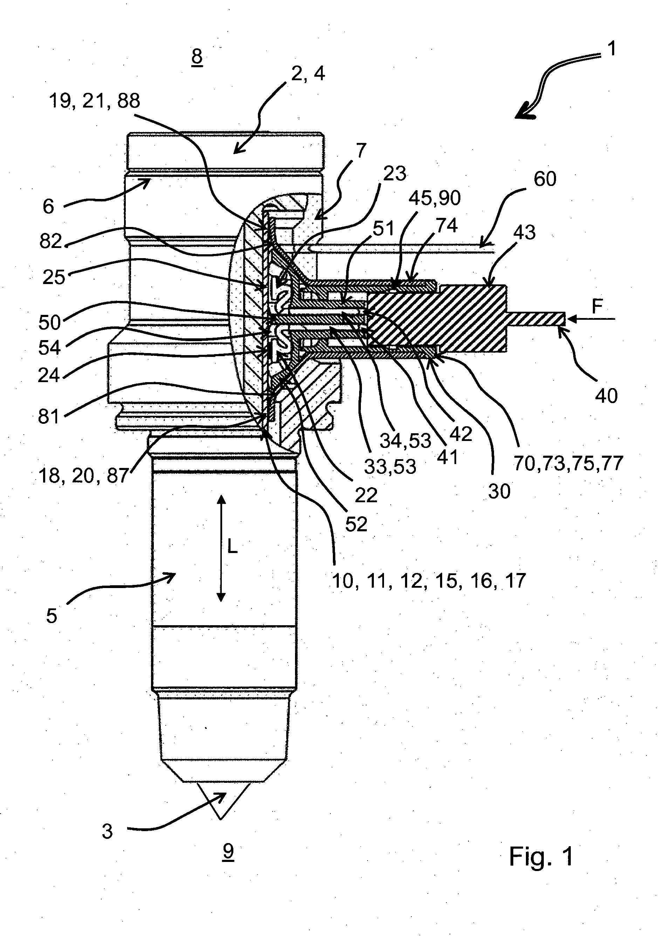

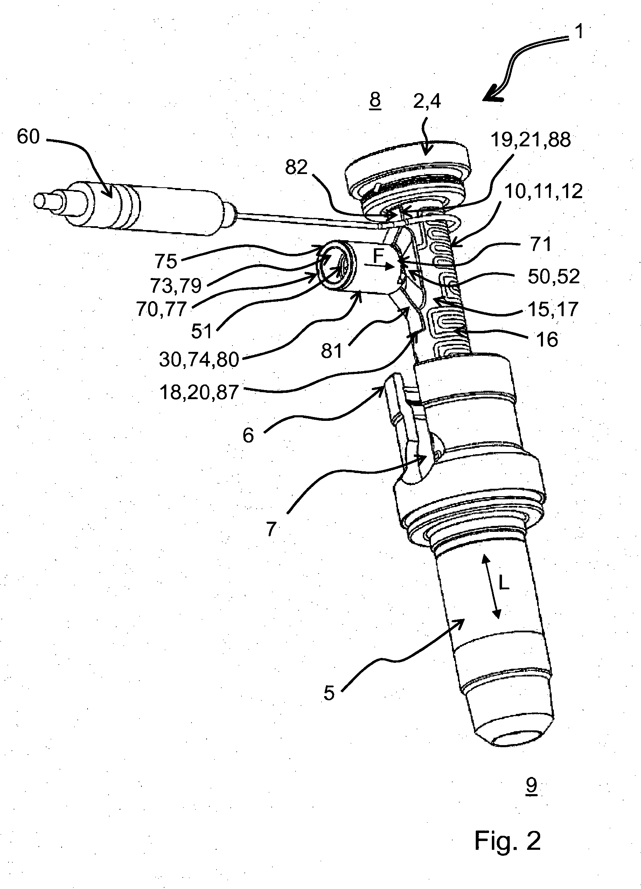

**Fig. 1** zeigt eine 3D-Ansicht einer Heißkanaldüse 1 mit einem Heizelement 10 mit einer in einem Schnittausbruch gezeigten sowie längsgeschnittenen Anschlusseinrichtung 30. In **Fig. 2** ist eine im Wesentlichen mit Fig. 1 übereinstimmende Heißkanaldüse 1 mit einem Heizelement 10 mit einer Anschlusseinrichtung 30 in einer 3D-Ansicht gezeigt, wobei ein Gehäuse 5 in einer verschobenen Vormontageposition zum Rest der Heißkanaldüse 1 dargestellt ist.

Eine solche in den **Fig. 1** **und** **2** dargestellte Heißkanaldüse 1 wird in einem (nicht gezeigten) Spritzgießwerkzeug eingesetzt, um eine fließfähige Kunststoffschmelze einem (nicht weiter dargestellten) trennbaren Formeinsatz 9 zuzuführen. Dabei können mehrere Heißkanaldüsen 1 gleicher oder unterschiedlicher Bauart an einem (gleichfalls nicht dargestellten) Verteiler 8 festgelegt sein.

Die Heißkanaldüse 1 hat ein Materialrohr 2 mit einem (nicht gezeigten) Schmelzekanal, der in einem Düsenmundstück 3, insbesondere einer Düsenspitze, endet. Letztere bildet endseitig eine (nicht näher bezeichnete) Düsenaustrittsöffnung, die über eine (gleichfalls nicht sichtbare) Angussöffnung in den Formeinsatz 9 des Spritzgießwerkzeugs mündet. An seinem gegenüber liegendem Ende trägt das Materialrohr 2 einen Flansch 4, der dichtend an dem Verteiler 8 oder einer Maschinendüse des Spritzgießwerkzeugs angeschlossen ist.

Auf dem Außenumfang des Materialrohres 2 ist ein (nur schematisch dargestelltes) elektrisches Heizelement 10 aufgesetzt. Dieses umfasst ein Trägerrohr 12 und eine darauf aufgebrachte Dickschichtheizung 15, 16, 17. Insbesondere hat das Trägerrohr 12 einen runden Querschnitt. Weiterhin ist das Trägerrohr 12 auf das Materialrohr 2 der Heißkanaldüse 1 aufgeschoben. Die Dickschichtheizung umfasst eine tragende erste Dickschicht 15, eine leitende zweite Dickschicht 16 und eine abdeckende dritte Dickschicht 17. Die tragende erste Dickschicht 15 ist eine unmittelbar auf dem Trägerrohr 12 aufgebrachte keramische Isolationsschicht. Die leitende zweite Dickschicht 16 bildet die eigentliche Heizschicht aus, wobei diese eine mäanderförmige und/oder verzweigte Heizleiterbahn aufweist, welche an ihren Enden mit Anschlussflächen 24, 25 versehen ist. Die abdeckende dritte Dickschicht 17 schützt und isoliert die Heizleiterbahnen. Die beliebig gestaltbaren Heizleiterbahnen können je nach erforderlicher Leistung in unterschiedlicher Dichte und Anordnung auf der tragenden ersten Dickschicht 15 aufgebracht sein. Dadurch lässt sich bei Bedarf eine definierte Temperaturverteilung innerhalb des Materialrohrs 2 erzielen. Der Aufbau eines solchen Heizelements ist in DE 10 2006 049 667 A1 beschrieben, auf deren Inhalt hiermit Bezug genommen wird. Ein alternatives Heizelement ist in DE 10 2006 049 669 A1 offenbart, auf deren Inhalt ebenfalls Bezug genommen wird.

Auf den Anschlussflächen 24, 25 der Heizleiterbahn sind Anschlusskontakte 22, 23 aufgebracht, beispielsweise in Form von Anschlussdrähten oder -leitungen, die mittels elektrisch leitender Haftschichten an den Heizleiterbahnen befestigt sind. Der Aufbau einer solchen elektrischen Verbindung mit mehreren elektrisch leitenden Haftschichten ist in DE 10 2008 015 376 A1 beschrieben, auf deren Inhalt hiermit Bezug genommen wird. Die Anschlusskontakte 22, 23 können aber auch durch andere Methoden an den Anschlussflächen 21 befestigt werden, beispielweise durch Schweißen oder mittels mechanischer Mittel.

Das Materialrohr 2 sitzt gemeinsam mit dem Heizelement 10 in einem Gehäuse 5, das in eine Aussparung im Spritzgießwerkzeug eingesetzt wird und die Heißkanaldüse 1 gegenüber der Angussöffnung zentriert. In dem Gehäuse 5 ist - wie in Fig. 2 zu sehen - eine seitliche Aussparung 7 eingebracht, die in Längsrichtung L der Heißkanaldüse 1 zum Verteiler 8 bzw. zum Flansch 4 des Materialrohres 2 hin offen ist. Die Aussparung 7 dient zur Aufnahme und Durchführung einer Anschlusseinrichtung 30 des Heizelements 10, die insbesondere über den Anschlussflächen 24, 25 des Heizelements 10 angeordnet ist und radial nach außen vorsteht. Man erkennt, dass der Flansch 4 des Materialrohres 2 in montiertem Zustand der Heißkanaldüse 1 auf dem Ende 6 des Gehäuses 5 aufliegt, sodass der Flansch 4 die Aussparung 7 verschließt.

Die Anschlusseinrichtung 30 dient zum Erzeugen einer elektrischen Verbindung zwischen dem elektrischen Heizelement 10 und einer Anschlussleitung 40, wobei die Anschlusskontakte 22, 23 des Heizelements 10 mit Kontaktelementen 41, 42 der Anschlussleitung 40 in Verbindung stehen. Letztere ist mit einer (nicht dargestellten) Stromquelle verbunden, welche das Heizelement 10 während des Betriebes der Heißkanaldüse 1 mit Strom versorgt.

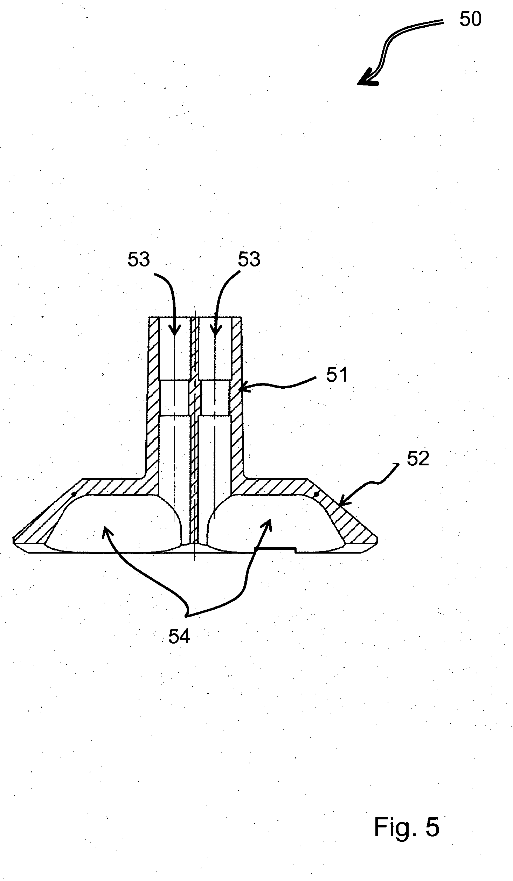

Die Anschlusseinrichtung 30 hat einen im Wesentlichen glocken- oder hutförmigen Isolierkörper 50, der bevorzugt aus einem keramischen Werkstoff oder aus einem anderen isolierenden Material gefertigt ist. Dieser in den Fig. 1 und 2 zu sehende Isolierkörper 50 ist in den **Fig. 5 bis 7** im Detail dargestellt. Er hat einen Halsabschnitt 51 sowie einen Sockelabschnitt 52 und nimmt die Anschlusskontakte 22, 23 des Heizelements 10 auf, wobei er diese elektrisch voneinander trennt.

Wie insbesondere Fig. 1 zeigt, sind die Anschlusskontakte 22, 23 des Heizelements 10 endseitig mit Kontaktstiften 33, 34 versehen. Diese sind bevorzugt aus Silber oder einem anderen Edelmetall gefertigt und durch Verlöten oder Quetschen (Crimpen) mit den Anschlusskontakten 22, 23 des Heizelements 10 fest verbunden.

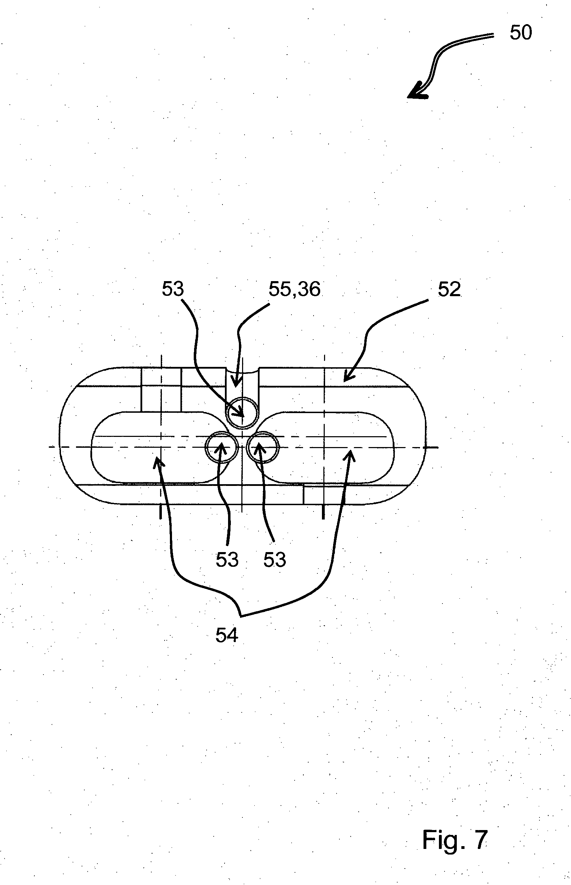

Jeder Kontaktstift 33, 34 ist kraft- und/oder formschlüssig von unten in den Isolierkörper 50 eingesetzt, der hierzu mit zwei parallel liegenden Aufnahmekanälen 53 versehen ist. Beide Aufnahmekanälen 53 enden jeweils in einem separaten Hohlraum 54, die im Bereich des Sockelabschnitts 52 ausgebildet sind (siehe hierzu auch Fig. 5 und 7). Man erkennt in Fig. 1, dass die Hohlräume 54 derart bemessen sind, dass diese die Anschlusskontakte 22, 23 aufnehmen können und dass der Sockelabschnitt 52 sowohl die Anschlusskontakte 22, 23 als auch die Anschlussflächen 24, 25 der Heizleiterbahnen überdeckt. Auf diese Weise sind die relativ empfindlichen Bereiche der elektrischen Anschlüsse nach außen hin geschützt.

Die Kontaktstifte 33, 34 können derart ausgebildet und in den Isolierkörper 50 eingesetzt sein, dass sie - wie in Fig. 1 und 2 dargestellt - mit ihren freien Enden nicht über die Stirnfläche des Halsabschnitts 51 des Isolierkörpers 50 hinausragen. In einer alternativen Ausführungsform können Sie jedoch durchaus über die Stirnfläche des Halsabschnitts 51 hervorstehen.

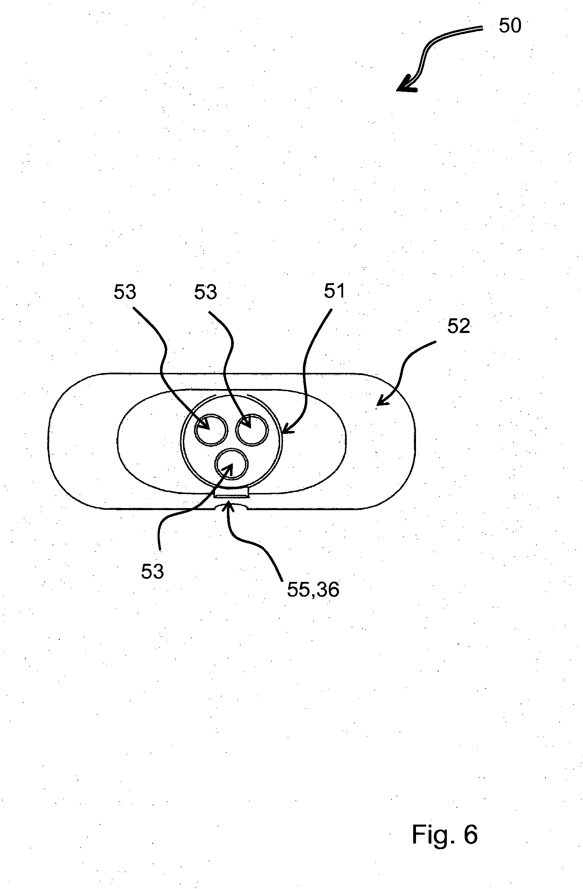

Wie in Fig. 6 und 7 angedeutet, ist in dem Isolierkörper 50 ein weiterer Kontaktstift für einen Masseanschluss 36 vorgesehen. Hierfür ist innerhalb des Isolierkörpers 50 ein weiterer Aufnahmekanal 53 ausgebildet (siehe dazu insbesondere Fig. 6 und 7), der den weiteren Kontaktstift kraft- und/oder formschlüssig aufnimmt. Der weitere Aufnahmekanal 53 endet in einer seitlichen Ausnehmung 55. Diese dient zur Durchführung des Masseanschlusses 36. Der weitere Kontaktstift des Masseanschlusses 36 ist ebenfalls aus Silber oder einem anderen Edelmetall gefertigt und durch Verlöten oder Quetschen (Crimpen) mit dem Anschlussdraht des Masseanschlusses 36 am Heizelement 10 verbunden. Damit beim Anschließen des elektrischen Heizelements 10 an die Anschlussleitung 40 bzw. an die Stromversorgung stets zuerst der Massekontakt hergestellt wird, ist der Kontaktstift des Masseanschlusses 36 länger ausgebildet als die Kontaktstifte 33, 34 für die Heizleiterbahnen.

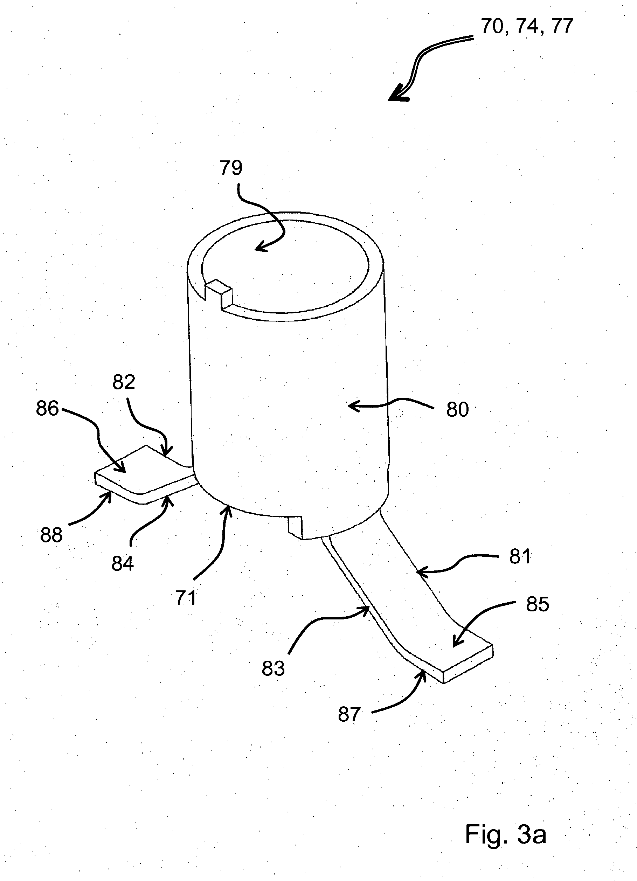

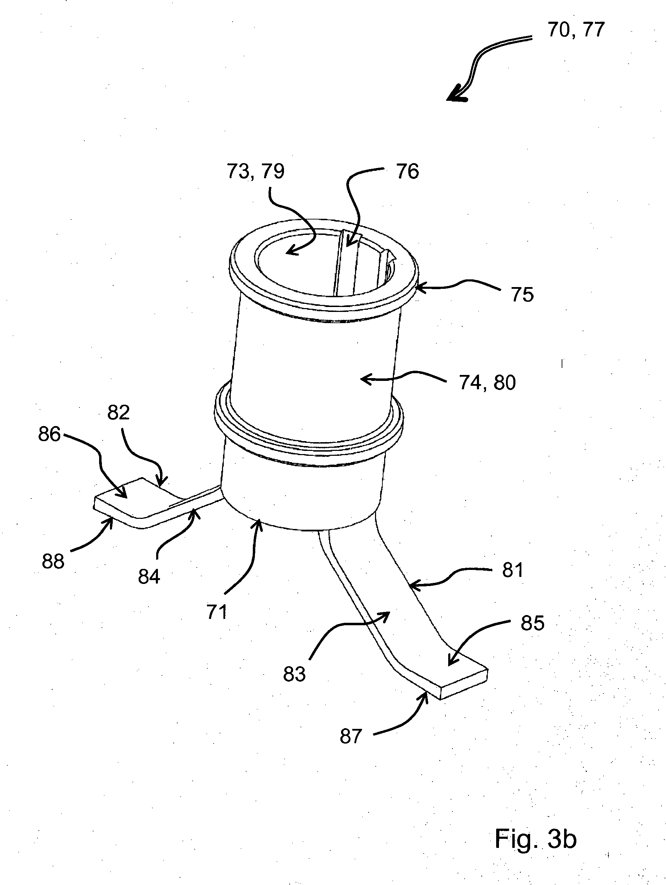

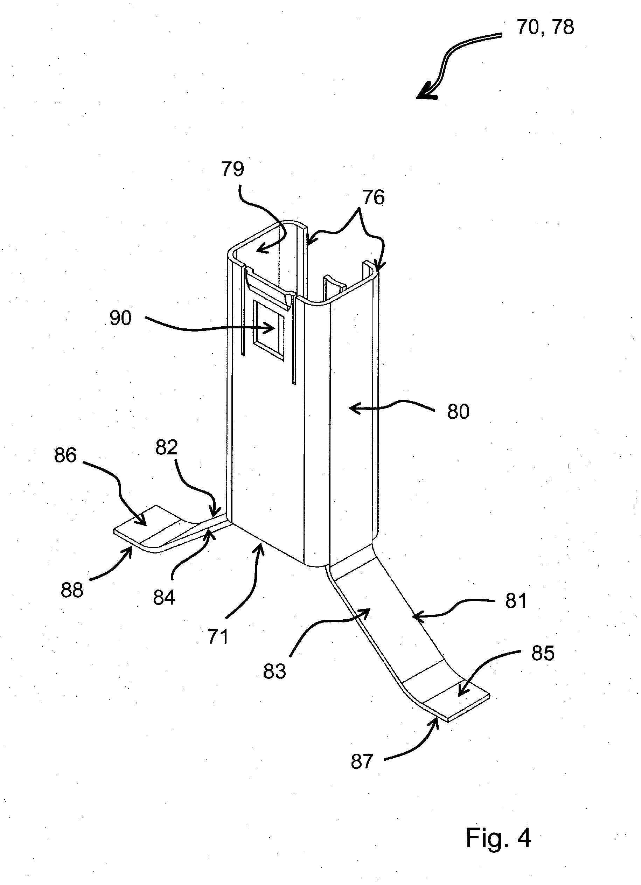

Der Isolierkörper 50 ist zumindest abschnittsweise in einer Aufnahmehülse 70 (siehe hierzu die Detaildarstellungen Fig. 3a, 3b und 4) der Anschlusseinrichtung 30 angeordnet (siehe hierzu Fig. 1 und 2). In montierter Position sitzt der Isolierkörper 50 - wie Fig. 1 und 2 zeigen - mit seinem Halsabschnitt 51 in der Aufnahmehülse 70. Die Aufnahmehülse 70 verfügt hierbei über einen Abschnitt mit einer Innenwandung 79, deren Geometrie im Wesentlichen der korrespondierenden Außengeometrie des Halsabschnitts 51 des Isolierkörpers 50 entspricht. Die Innenwandung 79 des Abschnitts ist ein Zylindermantel. Zwischen dem Isolierköper 50 und der Aufnahmehülse 70 ist zusätzlich eine Verdrehsicherung ausgebildet, insbesondere mittels einer Feder-Nut Geometrie. Ferner liegt der Sockelabschnitt 52 im Bereich des Heizelements 10.

Ein in Richtung des Heizelements 10 weisendes erstes Ende 71 der Aufnahmehülse 70 umgreift den Isolierkörper 50. An diesem ersten Ende 71 weist die Aufnahmehülse 70 zudem zwei gegenüberliegend nach außen weisende und am Heizelement 10 befestigte Füße 81, 82 auf. Die zwei Füße 81, 82 weisen entgegengesetzt in Längsrichtung L des Trägerrohres 12. Außerdem haben die Füße 81, 82 jeweils einen Schenkelabschnitt 83, 84, die in etwa V-förmig zueinander ausgerichtet sind. Zur Befestigung der Füße 81, 82 am Heizelement 10 hat die Dickschicht 15, 16, 17 im Bereich der Füße 81, 82 Aussparungen 18, 19. Dies erlaubt eine stabile Befestigung der Füße 81, 82 am Trägerrohr 12 des Heizelements 10. Insbesondere sind die Aufnahmehülse 70 und das Trägerrohr 12 aus Metall hergestellt. Die Befestigung erfolgt daher bevorzugt stoffschlüssig, insbesondere durch (Laser-)Schweißen.

Die in den Fig. 1 bis 4 gezeigten Füße 81, 82 sind jeweils mit einem Schenkelabschnitt 83, 84 an der Aufnahmehülse 70 festgelegt und mit jeweils einem auf dem Heizelement 10 aufliegenden Auflageabschnitt 85, 86 an diesem befestigt. Die Auflageflächen 87, 88 der Auflageabschnitte 85, 86 der Füße 81, 82 können jeweils eine Negativform einer korrespondierenden Auflagefläche 20, 21 des Heizelements 10 haben. Im Zusammenbau der Fig. 1 und 2 sind die Füße 81, 82 unter einer in Richtung des Heizelements 10 wirkenden Vorspannkraft F am Heizelement 10 befestigt. Hierfür ist die Aufnahmehülse 70 mit dem Isolierkörper 50 derart gekoppelt ist, dass der Isolierkörper 50 mit dieser Vorspannkraft F in Richtung des Heizelements 10 kraftbeaufschlagt ist. Die Kopplung erfolgt über einen Hinterschnitt zwischen der Aufnahmehülse 70 und dem Isolierkörper 50. Insbesondere stützt sich die Aufnahmehülse 70 auf dem Sockelabschnitt 52 des Isolierkörpers 50 ab. Alternativ bietet sich eine Kopplung über ein Federelement an. Letzteres kann einstückig mit der Aufnahmehülse 70 ausgebildet sein.

Ferner weist die in den **Fig. 1****,** **2** **und** **3b** dargestellte Aufnahmehülse 70 eine konzentrisch innenliegende Innenhülse 73 auf, welche in einer Außenhülse 74 der Aufnahmehülse 70 fixiert ist. Hierbei hat die Innenhülse 73 einen Kragen 75, der sich konzentrisch an der Außenhülse 74 der Aufnahmehülse 70 abstützt. Der Kragen 75 der Innenhülse 73 ist gemäß Fig. 1 und 2 mit der Außenhülse 74 stoffschlüssig verbunden, insbesondere durch Schweißen. Dies ermöglicht die Fertigung der Innenhülse 73 und der Außenhülse 74 mittels unterschiedlicher Herstellungsverfahren. Die Innenhülse 73 lässt sich so bevorzugt durch ein Lasersintern herstellen. Dahingegen können die Außenhülse 74 und die idealerweise hiermit einteilig ausgebildeten Füße 81, 82 durch trennende und spanende Verfahren aus einem Halbfertigrohr gefertigt werden. Insbesondere sollte die Außenhülse besonders zugfest, wenig spröde und verformbar sein. Die in den Figuren 1 bis 3b gezeigten Aufnahmehülsen 70 sind insbesondere als Kupplungsgehäuse 77 ausgebildet. Wie man erkennt, weist die Aufnahmehülse 70 gemäß Fig. 3b ein als Nut ausgebildetes Führungsmittel 76 für einen Stecker 43 der Anschlussleitung 40 aus. Eine Besonderheit der in **Fig. 3b** dargestellten Ausführungsform der Aufnahmehülse 70 liegt weiterhin in der einteiligen Herstellung von Innenhülse 73 und Außenhülse 74.

Eine alternative Ausbildung der Aufnahmehülse 70 zeigt **Fig. 4****.** Diese ist als Steckergehäuse 78 ausbildet. Auch dieses Steckergehäuse 78 umfasst Führungsmittel 76. Zum einen sind diese durch einen im Wesentlichen rechteckigen Querschnitt der Aufnahmehülse 70 und zum anderen durch Führungsnuten ausgebildet.

Um einen stets zuverlässigen und lösbaren elektrischen Kontakt zwischen den Kontaktstiften 33, 34 des Heizelements 10 und den Kontaktelementen 41, 42 der Anschlussleitung 40 sowie zwischen dem weiteren Kontaktstift des Masseanschlusses 36 und dem der Anschlussleitung 40 herzustellen, ist gemäß der Ausführung von **Fig. 1** an der Anschlussleitung 40 ein dreipoliger Stecker 43 ausgebildet. Dieser hat an seinem Außenumfang radial nach außen vorstehende Rastelemente 45, die beim Einführen des Steckers 43 in die Aufnahmehülse 70 in deren Rastnut 90 eingreifen. Damit der Stecker 43 nicht falsch herum eingeführt werden kann, sind am Außenumfang zwei (nicht dargestellte) Vorsprünge ausgebildet, die wie ein Schlüssel in Führungsnuten 76 der Aufnahmehülse 70 eingreifen. Der Stecker 43 und die Anschlusseinrichtung 30 sind derart bemessen und ausgelegt, dass nach dem Verrasten der Rastelemente 45, die Kontaktelemente 41, 42 der Anschlussleitung 40 die Kontaktstifte 33, 34 des Heizelements 10 stets zuverlässig elektrisch kontaktieren.

Weiterhin umfasst die Heißkanaldüse 1 nach Fig. 1 und 2 einen Thermofühler 60. Der Thermofühler 60 verläuft parallel zur Anschlusseinrichtung 30 vom Heizelement 10 weg. In Richtung des Heizelements 10 ist der Thermofühler 60 zunächst heliceartig um das Heizelement 10 herumgeführt, bevor er parallel zum Trägerrohr 12 in Richtung Düsenmundstück 3 verläuft.

Für die Montage der Anschlusseinrichtung 30 werden zunächst die Anschlusskontakte 22, 23 des Heizelements 10 endseitig mit Kontaktstiften 33, 34 versehen. Diese werden anschließend in den Isolierkörper 50 eingesetzt, wobei die Kontaktstifte 33, 34 in dessen Aufnahmekanälen 53 verrastet oder verklemmt werden. Der bereits in dem Isolierkörper 50 vormontierte Kontaktstift des Masseanschlusses 36 wird mit seiner (nicht gezeigten) Leitung an dem Trägerrohr 12 des Heizelements 10 angeschlossen, vorzugsweise durch verlöten oder mechanisch. Danach wird der Isolierkörper 50 mit seinem Sockelabschnitt 52 auf das Heizelement 10 aufgesetzt, wobei der Sockelabschnitt 52 die Anschlussflächen 24, 25 und die Anschlusskontakte 22, 23 des Heizelements 10 abdeckt. Der Halsabschnitt 51 des Isolierkörpers 50 steht etwa rechtwinklig und radial von der Oberfläche des Heizelements 10 ab.

Die Aufnahmehülse 70 wird über den Isolierkörper 50 geschoben, sodass es diesen umgreift und die Füße 81, 82 gegenüberliegend, entgegengesetzt und in Längsrichtung L des Trägerrohres 12 weisen. Durch Andrücken der Füße 81, 82 in Richtung des Heizelements 10 werden diese elastisch verformt. In Anlage mit dem Heizelement 10 werden die Füße 81, 82 anschließend durch Laserschweißen am Heizelement 10 befestigt.

Nach dem Fixieren der Aufnahmehülse 70 am Heizelement 10 werden das Materialrohr 2 und das Heizelement 10 in das Gehäuse 5 der Heißkanaldüse 1 eingesetzt, bis der Flansch 4 des Materialrohres 2 stirnseitig auf dem rückwärtigen Ende 6 des Gehäuses 5 aufsitzt. Dabei wird die radial nach außen abstehende Anschlusseinrichtung 30 in die Aussparung 7 im Gehäuse 5 eingeführt.

Um das Heizelement 10 an die Stromversorgung anzuschließen, muss nur noch der Stecker 43 oder eine Kupplung der Anschlussleitung 40 mit der Aufnahmehülse 70 gekoppelt werden. Dabei stellt zunächst der vorauseilende Kontaktstift des Masseanschlusses 36 einen Kontakt her. Dabei verrasten die Rastelemente 45, so dass sich die Steckverbindung nicht mehr ungewollt lösen kann. Die Kontaktstifte 33, 34 kontaktieren dann die Kontaktelemente 41, 42 der Anschlussleitung 40. Sobald der Thermofühler 60 angeschlossen ist, kann die Heißkanaldüse 1 betrieben werden.

Zum Lösen des elektrischen Kontakts, muss lediglich der Stecker 43 oder die Kupplung der Anschlussleitung 40 von der Aufnahmehülse 70 abgezogen werden. Hierbei werden die Rastelemente 45 eingefahren, indem entweder ein entsprechendes Stellglied betätigt wird oder der Stecker ist mit einer sogenannten Push-Pull-Technik ausgerüstet, wie sie beispielsweise von der Firma LEMO bekannt ist.

Die Erfindung ist nicht auf eine der vorbeschriebenen Ausführungsformen beschränkt, sondern in vielfältiger Weise abwandelbar.

Eine optionale Ergänzung der beschriebenen Ausführungsbeispiele sieht eine Pufferschicht vor, die zwischen dem Isolierkörper 50 und dem Heizelement 10 angeordnet ist. Als Pufferschicht eignet sich ein temperaturbeständiges Material, insbesondere Glimmer. Die Pufferschicht hat dann eine geringere Härte als der Isolierkörper 50 und das Heizelement 10. Weiterhin kann die Pufferschicht entweder als separates Bauteil oder aber stoffschlüssig am Isolierkörper oder dem Heizelement aufgebracht sein. In der Pufferschicht sind schließlich mit den Kontaktstiften 33, 34, 35 bzw. den Anschlussflächen 24, 25 korrespondierende Ausnehmungen eingebracht. Durch diese sind die elektrisch leitenden Elemente hindurchgeführt.

**Bezugszeichenliste**

| | | | |
|---|---|---|---|
| 1 | Heißkanaldüse | 42 | zweites Kontaktelement |
| 2 | Materialrohr | 43 | Stecker |
| 3 | Düsenmundstück | 45 | Rastelement |
| 4 | Flansch (Materialrohr) | | |
| 5 | Gehäuse | 50 | Isolierkörper |
| 6 | Gehäuseende | 51 | Halsabschnitt |
| 7 | Aussparung | 52 | Sockelabschnitt |
| 8 | Verteiler | 53 | Aufnahmekanäle |
| 9 | Formeinsatz | 54 | Hohlraum |
| | | 55 | seitliche Ausnehmung |
| 10 | Heizelement | | |
| 11 | Trägerelement | 60 | Thermofühler |
| 12 | Trägerrohr | | |
| 15 | erste Dickschicht (Trägerschicht) | 70 | Aufnahmehülse |
| 16 | zweite Dickschicht (Leiterschicht) | 71 | erstes Ende der Aufnahmehülse |
| 17 | dritte Dickschicht (Abdeckschicht) | 73 | Innenhülse |
| 18 | erste Aussparung | 74 | Außenhülse |
| 19 | zweite Aussparung | 75 | Kragen der Innenhülse |
| 20 | erste Auflagefläche | 76 | Führungsmittel |
| 21 | zweite Auflagefläche | 77 | Kupplungsgehäuse |
| 22 | erster Anschlusskontakt | 78 | Steckergehäuse |
| 23 | zweiter Anschlusskontakt | 79 | Innenwandung (Aufnahmehülse) |
| 24 | erste Anschlussfläche | 80 | Außenseite |
| 25 | zweite Anschlussfläche | 81 | erster Fuß |
| | | 82 | zweiter Fuß |
| 30 | Anschlusseinrichtung | 83 | erster Schenkelabschnitt |
| 33 | erster Kontaktstift | 84 | zweiter Schenkelabschnitt |
| 34 | zweiter Kontaktstift | 85 | erster Auflageabschnitt |
| 35 | weiterer Kontaktstift | 86 | zweiter Auflageabschnitt |
| 36 | Masseanschluss | 87 | erste Auflagefläche |
| | | 88 | zweite Auflagefläche |
| 40 | Anschlussleitung | | |
| 41 | erstes Kontaktelement | 90 | Rastnut |
| | | L | Längsrichtung |
| F | Vorspannkraft | | |

## Patentansprüche

1. Heißkanaldüse (1) mit einem elektrischen Heizelement (10), das eine Anschlusseinrichtung (30) zum Erzeugen einer elektrischen Verbindung zu einer Anschlussleitung (40) umfasst, wobei Anschlusskontakte (22, 23) des Heizelements (10) in einem Isolierkörper (50) der Anschlusseinrichtung (30) enden, der die Anschlusskontakte (22, 23) elektrisch voneinander trennt, und wobei die Anschlussleitung (40) Kontaktelemente (41, 42) aufweist, die mit den Anschlusskontakten (22, 23) des Heizelements (10) elektrisch kontaktierbar sind, wobei der Isolierkörper (50) zumindest abschnittsweise in einer Aufnahmehülse (70) der Anschlusseinrichtung (30) angeordnet ist, und wobei die Anschlussleitung (40) derart in oder an der Aufnahmehülse (70) festlegbar ist, dass die Kontaktelemente (41, 42) der Anschlussleitung (40) die Anschlusskontakte (22, 23) des Heizelements (10) elektrisch kontaktieren, **dadurch gekennzeichnet, dass** ein in Richtung des Heizelements (10) weisendes erstes Ende (71) der Aufnahmehülse (70) den Isolierkörper (50) umgreift sowie an diesem ersten Ende (71) zwei gegenüberliegend nach außen weisende und am Heizelement (10) befestigte Füße (81, 82) aufweist.

2. Heißkanaldüse (1) nach Anspruch 1, **dadurch gekennzeichnet, dass** das Heizelement (10) ein Trägerrohr (12) aufweist.

3. Heißkanaldüse (1) nach Anspruch 2, **dadurch gekennzeichnet, dass** die zwei Füße (81, 82) entgegengesetzt in Längsrichtung (L) des Trägerrohres (12) weisen.

4. Heißkanaldüse (1) nach einem der vorhergehenden Ansprüche, **dadurch gekennzeichnet, dass** das Heizelement (10) ein abdeckendes Schutzelement aufweist, durch welches die Anschlusskontakte (22, 23) hindurchgeführt sind, sowie die Füße (81, 82) der Aufnahmehülse (70) am Schutzelement befestigt sind.

5. Heißkanaldüse (1) nach einem der vorhergehenden Ansprüche, **dadurch gekennzeichnet, dass** das Heizelement (10) eine elektrisch leitende Dickschicht (15, 16, 17) aufweist.

6. Heißkanaldüse (1) nach einem der vorhergehenden Ansprüche, **dadurch gekennzeichnet, dass** die Aufnahmehülse (70) aus Metall hergestellt ist.

7. Heißkanaldüse (1) nach einem der vorhergehenden Ansprüche, **dadurch gekennzeichnet, dass** die Aufnahmehülse (70) ein Führungsmittel (76) für einen Stecker (43) oder eine Kupplung der Anschlussleitung (40) ausbildet.

8. Heißkanaldüse (1) nach einem der vorhergehenden Ansprüche, **dadurch gekennzeichnet, dass** die Füße (81, 82) stoffschlüssig am Heizelement (10) befestigt sind.

9. Heißkanaldüse (1) nach einem der vorhergehenden Ansprüche, **dadurch gekennzeichnet, dass** die Füße (81, 82) einteilig mit der Aufnahmehülse (70) ausgebildet sind.

10. Heißkanaldüse (1) nach einem der vorhergehenden Ansprüche, **dadurch gekennzeichnet, dass** die Füße (81, 82) jeweils mit einem Schenkelabschnitt (83, 84) an der Aufnahmehülse (70) festgelegt und mit jeweils einem auf dem Heizelement (10) aufliegenden Auflageabschnitt (85, 86) an diesem befestigt sind.

11. Heißkanaldüse (1) nach einem der vorhergehenden Ansprüche, **dadurch gekennzeichnet, dass** die Füße (81, 82) unter einer in Richtung des Heizelements (10) wirkenden Vorspannkraft (F) am Heizelement (10) befestigt sind, wobei die Aufnahmehülse (70) mit dem Isolierkörper (50) derart gekoppelt ist, dass der Isolierkörper (50) mit dieser Vorspannkraft (F) in Richtung des Heizelements (10) kraftbeaufschlagt ist.

12. Heißkanaldüse (1) nach einem der vorhergehenden Ansprüche, **dadurch gekennzeichnet, dass** der Isolierkörper (50) einen Halsabschnitt (51) und einen Sockelabschnitt (52) aufweist, wobei sich die Aufnahmehülse (70) auf dem Sockelabschnitt (52) des Isolierkörpers (50) abstützt.

13. Heißkanaldüse (1) nach einem der vorhergehenden Ansprüche, **dadurch gekennzeichnet, dass** in ein das Heizelement (10) einfassendes Gehäuse (5) eine seitliche Aussparung (7) eingebracht ist, die in Längsrichtung (L) der Heißkanaldüse (1) zu einem Verteiler (8) bzw. zu einem Flansch (4) eines Materialrohres (2) hin offen ausgebildet ist, wobei die Aufnahmehülse (70) durch die seitliche Aussparung (7) hindurchragt.

14. Heißkanaldüse (1) nach einem der vorhergehenden Ansprüche, **dadurch gekennzeichnet, dass** in dem Isolierkörper ein oder zwei weitere Anschlusskontakte mit Kontaktstiften (35) angeordnet sind, die mit einem Thermofühler (60) elektrisch verbunden sind.

15. Heißkanaldüse (1) nach einem der vorhergehenden Ansprüche, **dadurch gekennzeichnet, dass** die Aufnahmehülse (70) ein Befestigungsmittel für einen Thermofühler (60) aufweist.

## Claims

1. Hot runner nozzle (1) having an electrical heating element (10) that comprises a connector (30) for establishing an electrical connection to a connection line (40), terminal contacts (22, 23) of the heating element (10) terminating in an insulation body (50) of the connector (30) that separates the terminal contacts (22, 23) from one another electrically, and the connection line (40) having contact elements (41, 42) that are electrically contactable with the terminal contacts (22, 23) of the heating element (10), the insulation body (50) being arranged at least in portions in a receiving sleeve (70) of the connector (30), and it being possible for the connection line (40) to be fixed in or on the receiving sleeve (70) such that the contact elements (41, 42) of the connection line (40) electrically contact the terminal contacts (22, 23) of the heating element (10), **characterised in that** a first end (71) of the receiving sleeve (70) that faces towards the heating element (10) wraps around the insulation body (50) and has on this first end (71) two opposing feet (81, 82) that face outward and that are attached to the heating element (10).

2. Hot runner nozzle (1) according to claim 1, **characterised in that** the heating element (10) has a support tube (12).

3. Hot runner nozzle (1) according to claim 2, **characterised in that** the two feet (81, 82) face in opposite directions in the longitudinal direction (L) of the support tube (12).

4. Hot runner nozzle (1) according to any of the preceding claims, **characterised in that** the heating element (10) has a covering protective element through which the terminal contacts (22, 23) are passed and the feet (81, 82) of the receiving sleeve (70) are attached to the protective element.

5. Hot runner nozzle (1) according to any of the preceding claims, **characterised in that** the heating element (10) has an electrically conductive thick film (15, 16, 17).

6. Hot runner nozzle (1) according to any of the preceding claims, **characterised in that** the receiving sleeve (70) is made of metal.

7. Hot runner nozzle (1) according to any of the preceding claims, **characterised in that** the receiving sleeve (70) forms a guide means (76) for a plug (43) or a coupling of the connection line (40).

8. Hot runner nozzle (1) according to any of the preceding claims, **characterised in that** the feet (81, 82) are integrally connected to the heating element (10).

9. Hot runner nozzle (1) according to any of the preceding claims, **characterised in that** the feet (81, 82) are formed in one piece with the receiving sleeve (70).

10. Hot runner nozzle (1) according to any of the preceding claims, **characterised in that** the feet (81, 82) are each fixed by means of a leg portion (83, 84) on the receiving sleeve (70) and are each attached to the heating element (10) by means of a support portion (85, 86) resting thereon.

11. Hot runner nozzle (1) according to any of the preceding claims, **characterised in that** the feet (81, 82) are attached to the heating element (10) under a prestressing force (F) acting in the direction of the heating element (10), the receiving sleeve (70) being coupled to the insulation body (50) such that the insulation body (50) is subjected to the force of this prestressing force (F) in the direction of the heating element (10).

12. Hot runner nozzle (1) according to any of the preceding claims, **characterised in that** the insulation body (50) has a neck portion (51) and a base portion (52), the receiving sleeve (70) being supported on the base portion (52) of the insulation body (50).

13. Hot runner nozzle (1) according to any of the preceding claims, **characterised in that** a lateral recess (7) is incorporated in a housing (5) that surrounds the heating element (10), which recess is configured to be open in the longitudinal direction (L) of the hot runner nozzle (1) to a manifold (8) or to a flange (4) of a material tube (2), the receiving sleeve (70) projecting through the lateral recess (7).

14. Hot runner nozzle (1) according to any of the preceding claims, **characterised in that** one or two additional terminal contacts are arranged in the insulation body with contact pins (35) that are electrically connected to a thermosensor (60).

15. Hot runner nozzle (1) according to any of the preceding claims, **characterised in that** the receiving sleeve (70) has a fastening means for a thermosensor (60).

## Revendications

1. Buse de canal chaud (1) pourvue d'un élément chauffant électrique (10), qui comprend un dispositif de connexion (30) pour la production d'une connexion électrique avec une ligne de connexion (40), dans laquelle des contacts de connexion (30) de l'élément chauffant (10) se terminent par un corps isolant (50) du dispositif de connexion (22, 23), qui sépare l'un de l'autre électriquement les contacts de connexion (22, 23), et dans laquelle la ligne de connexion (40) présente des éléments de contact (41, 42) qui peuvent être mis en contact électrique avec les contacts de connexion (22, 23) de l'élément chauffant (10), dans laquelle le corps isolant (50) est aménagé au moins par sections dans une douille réceptrice (70) du dispositif de connexion (30) et dans laquelle la ligne de connexion (40) peut être fixée dans ou sur la douille réceptrice (70) de sorte que les éléments de contact (41, 42) de la ligne de connexion (40) viennent en contact électrique avec les contacts de connexion (22, 23) de l'élément chauffant (10), **caractérisée en ce qu'**une première extrémité (71) de la douille réceptrice (70) tournée dans la direction de l'élément chauffant (10) enveloppe le corps isolant (50) tout en présentant sur cette première extrémité (71) deux pieds (81, 82) tournés à l'opposé vers l'extérieur et fixés à l'élément chauffant (10).

2. Buse de canal chaud (1) selon la revendication 1, **caractérisée en ce que** l'élément chauffant (10) présente un tube porteur (12).

3. Buse de canal chaud (1) selon la revendication 2, **caractérisée en ce que** les deux pieds (81, 82) sont tournés à l'opposé dans la direction longitudinale (L) du tube porteur (12).

4. Buse de canal chaud (1) selon l'une quelconque des revendications précédentes, **caractérisée en ce que** l'élément chauffant (10) présente un élément protecteur couvrant à travers lequel les contacts de connexion (22, 23) passent, tandis que les pieds (81, 82) de la douille réceptrice (70) sont fixés sur l'élément protecteur.

5. Buse de canal chaud (1) selon l'une quelconque des revendications précédentes, **caractérisée en ce que** l'élément chauffant (10) présente une couche épaisse (15, 16, 17) conductrice de l'électricité.

6. Buse de canal chaud (1) selon l'une quelconque des revendications précédentes, **caractérisée en ce que** la douille réceptrice (70) est formée de métal.

7. Buse de canal chaud (1) selon l'une quelconque des revendications précédentes, **caractérisée en ce que** la douille réceptrice (70) forme un moyen de guidage (76) pour une prise (43) ou un couplage de la ligne de connexion (40).

8. Buse de canal chaud (1) selon l'une quelconque des revendications précédentes, **caractérisée en ce que** les pieds (81, 82) sont fixés venus de matière sur l'élément chauffant (10).

9. Buse de canal chaud (1) selon l'une quelconque des revendications précédentes, **caractérisée en ce que** les pieds (81, 82) sont formés d'une seule pièce avec la douille réceptrice (70).

10. Buse de canal chaud (1) selon l'une quelconque des revendications précédentes, **caractérisée en ce que** les pieds (81, 82) sont fixés respectivement par une section d'aile (83, 84) sur la douille réceptrice (70) et sont fixés par respectivement une section de support (85, 86) s'appliquant sur l'élément chauffant (10) sur celle-ci.

11. Buse de canal chaud (1) selon l'une quelconque des revendications précédentes, **caractérisée en ce que** les pieds (81, 82) sont fixés sur l'élément chauffant (10) sous une force de précontrainte (F) agissant dans la direction de l'élément chauffant (10), dans laquelle la douille réceptrice (70) est accouplée au corps isolant (50) de sorte que le corps isolant (50) soit sollicité par cette force de précontrainte (F) dans la direction de l'élément chauffant (10).

12. Buse de canal chaud (1) selon l'une quelconque des revendications précédentes, **caractérisée en ce que** le corps isolant (50) présente une section de col (51) et une section de socle (52), dans laquelle la douille réceptrice (70) s'appuie sur la section de socle (52) du corps isolant (50).

13. Buse de canal chaud (1) selon l'une quelconque des revendications précédentes, **caractérisée en ce qu'**il est ménagé dans un boîtier (5) renfermant l'élément chauffant (10) une cavité latérale (7) qui, dans la direction longitudinale (L) de la buse de canal chaud (1), se présente ouverte vers un distributeur (8) ou une bride (4) d'un tube de matériau (2), dans laquelle la douille réceptrice (70) passe à travers la cavité latérale (7).

14. Buse de canal chaud (1) selon l'une quelconque des revendications précédentes, **caractérisée en ce que** l'on aménage dans le corps isolant un ou deux autres contacts de connexion avec des broches de contact (35) qui sont connectées électriquement avec une sonde thermique (60).

15. Buse de canal chaud (1) selon l'une quelconque des revendications précédentes, **caractérisée en ce que** la douille réceptrice (70) présente un moyen de fixation pour une sonde thermique (60).
